# EUROPEAN PATENT SPECIFICATION

(11) **EP 2 455 336 B1**
(45) Date of publication and mention of the grant of the patent: **04.04.2018**
(21) Application number: 10799557.3
(22) Date of filing: 01.06.2010
(51) Int. Cl.: C01B 3/12, C01B 32/50, B01D 53/18, F25J 3/02, C10J 3/48, C10J 3/78, C10K 3/04, C10K 1/02

(54) **PROCESS FOR PRODUCING HYDROGEN**
VERFAHREN ZUR PRODUKTION VON WASSERSTOFF
PROCÉDÉ POUR LA PRODUCTION D'HYDROGÈNE

(30) Priority: 13.07.2009 JP 2009165071
(43) Date of publication of application: 23.05.2012
(73) Proprietor: Kawasaki Jukogyo Kabushiki Kaisha, Kobe-shi, Hyogo 650-8670 (JP)
(72) Inventor: HARADA, Eiichi, Akashi-shi Hyogo 673-8666 (JP); HIROKAWA, Masatoshi, Akashi-shi Hyogo 673-8666 (JP); YAMASHITA, Seiji, Akashi-shi Hyogo 673-8666 (JP); HAKAMADA, Kazuhide, Akashi-shi Hyogo 673-8666 (JP); OKADA, Shunji, Akashi-shi Hyogo 673-8666 (JP); OGINO, Tomoyuki, Akashi-shi Hyogo 673-8666 (JP); KUMADA, Norihiko, Akashi-shi Hyogo 673-8666 (JP); HORI, Toru, Koto-ku Tokyo 136-8588 (JP)
(74) Representative: Matthews, Derek Peter
(86) International application number: PCT/JP2010/003657
(87) International publication number: WO 2011/007493

(56) References cited:
- EP-A1- 1 195 353
- EP-A1- 1 207 132
- WO-A1-00/66487
- CA-A1- 2 354 343
- JP-A- 10 072 202
- JP-A- 2003 074 372
- JP-A- 2005 040 660

## Description

### [Technical Field]

The present invention relates to a method of producing a highly-pure hydrogen gas from a low-quality fuel, such as low rank coal or biomass.

### [Background Art]

Known as a hydrogen production method is a technology of causing steam to act on coal, heavy oil, or the like under high temperature and pressure to generate a mixture gas of hydrogen, carbon monoxide, carbon dioxide, steam, and the like. The hydrogen can be further generated from the carbon monoxide by a chemical reaction (water gas shift reaction, shift reaction) represented by "CO+H₂O→CO₂+H₂". In such conventional hydrogen production methods, the carbon dioxide is entirely discharged to the atmosphere. However, in recent years, attempts not to discharge the carbon dioxide to the atmosphere are being made to prevent global warming.

PTL 1 discloses a technology of: directing to deep sea the gas containing the carbon dioxide and the steam after the water gas shift reaction; dissolving the carbon dioxide in sea water; and selectively extracting the hydrogen gas. PTL 2 discloses a hydrogen production method, which produces the hydrogen by a catalyst gasification reaction of ashless coal and in which: used as the ashless coal is ashless coal derived from brown coal or subbituminous coal; a gasification temperature is 600 to 650°C; and used as the catalyst is potassium carbonate.

PTL 3 discloses a method of producing the hydrogen from the biomass, and the method includes (i) a first step of gasifying the biomass to generate a mixed gas containing hydrocarbon, hydrogen, and carbon monoxide, (ii) a second step of purifying the mixture of gases obtained in the first step, (iii) a third step of converting the hydrocarbon contained in the mixture of gases obtained in the second step into the hydrogen and the carbon monoxide, and (iv) a fourth step of recovering the hydrogen from the mixture of gases obtained in the third step.

As a method of removing the carbon monoxide in the mixture gas, there is a technology of causing a ruthenium-based catalyst, such as Ru/Al₂O₃, to contact the mixture gas at 60 to 210°C to selectively oxidize the carbon monoxide to the carbon dioxide (PTL 4).

Here, smokeless coal and bituminous coal, whose coal ranks are high, are called high rank coal, and subbituminous coal, brown coal, and peat, whose coal ranks are low, are called low rank coal. The low rank coal is low in coal rank and contains a large amount of moisture and oxygen. Since the amount of moisture is too large, using the low rank coal as the fuel of a pulverized coal boiler is beyond the capability of a pulverizing/drying device in many cases. Since the low rank coal is low in the heating value per weight, the transportation cost becomes high. If the low rank coal is dehydrated, it tends to ignite spontaneously. As above, the low rank coal is hard to handle. On this account, although the low rank coal reserve is large, the use of the low rank coal is limited to, for example, power generation around mines. This is because it is difficult to transport the low rank coal.

PTL 5 discloses a technology of increasing the heating value of the low rank coal and improving the transportation efficiency by: mixing porous coal with mixed oil containing heavy oil and solvent oil to prepare raw material slurry; and impregnating fine holes of the porous coal with the mixed oil for dehydration.

PTL 6 discloses a technology of: synthesizing dimethyl ether, which is easy to transport, from coal seam gas (methane-containing gas) or natural gas produced from coal seams; transporting the dimethyl ether; decomposing the dimethyl ether to produce the hydrogen gas at a place where the dimethyl ether has been transported; recovering the carbon dioxide; transporting the carbon dioxide as liquefied carbon dioxide to a place where the dimethyl ether is produced (where the coal is produced); and pouring and disposing the carbon dioxide into the coal seams.

PTL 7 discloses a hydrogen production method comprising a gasification step for gasifying combustibles (a) and a gas processing step for refining a produced gas (b) to produce hydrogen. The gas processing step comprises a methanation step for reacting carbon dioxide and carbon monoxide in the produced gas (b), obtained in the gasification step, with hydrogen to convert carbon dioxide and carbon monoxide into methane, and a hydrogen purifying step for separating methane, nitrogen and argon in the gas after the methanation.

### [Citation List]

### [Patent Literature]

PTL 1: Japanese Laid-Open Patent Application Publication No. 3-242301
PTL 2: Japanese Laid-Open Patent Application Publication No. 2009-13320
PTL 3: Japanese Laid-Open Patent Application Publication No. 2004-182501
PTL 4: Japanese Patent No. 2869525
PTL 5: Japanese Laid-Open Patent Application Publication No. 2008-144113
PTL 6: Japanese Laid-Open Patent Application Publication No. 2005-330170
PTL 7: WO 01/04045 and EP-A-1 207 132

### [Summary of Invention]

### [Technical Problem]

Artificially recovering the carbon dioxide discharged to the atmosphere as a gas or the carbon dioxide immediately before the discharge and containing the carbon dioxide in the ground or water is called Carbon dioxide Capture and Storage (CCS). As described above, in the technology in which the hydrogen gas is produced from coal or the like, not only the hydrogen gas producibility but also the CCS is regarded as important.

According to the method, disclosed in PTL 1, of directing the carbon dioxide to the deep sea, the hydrogen gas can be produced without discharging the carbon dioxide from, for example, the coal to the atmosphere. However, the problem is that since the hydrogen gas is extracted by injecting the gas containing hydrogen, carbon dioxide, and steam into a pressure vessel placed under the deep sea, the place where the hydrogen is produced is limited to coastal areas. Therefore, from the viewpoint of economical efficiency, it is difficult to produce the hydrogen by utilizing, for example, the coal existing in especially inland areas. In addition, such ocean sequestration has been prohibited by the 1996 Protocol of London Convention and the Marine Pollution Prevention Law.

The method, disclosed in PTL 5, of reforming the porous coal can achieve the effects of improving the transportation efficiency of the porous coal and increasing the heating value of the porous coal. However, the reformed porous coal still contains carbon, and the carbon dioxide needs to be separated and recovered at a place where the reformed porous coal is consumed. Therefore, the use of the reformed porous coal is limited to, for example, a large thermal power plant equipped with CCS facilities.

Also in the technology, disclosed in PTL 6, of utilizing the dimethyl ether, the carbon dioxide generated when decomposing the dimethyl ether and producing the hydrogen needs to be separated and recovered and needs to be transported as the liquefied carbon dioxide to a place where the dimethyl ether is produced and a place where the coal is produced.

As above, according to the prior arts of producing the hydrogen gas from a fossil fuel, such as the coal, in the case of taking the CCS into account, the places where the coal or the like is produced are limited, and most of a large amount of low rank coal and the like remains unconsumed.

In the case of the conventional technology of reforming the porous coal, the carbon dioxide needs to be separated and recovered at a place where the reformed porous coal is consumed. Therefore, such technology cannot be widely utilized in distributed applications without the CCS facilities. On this account, it is difficult to accelerate the use of the low rank coal.

In the case of gasifying the low rank coal by causing the steam to act on the low rank coal under high temperature and pressure, a common composition of the generated mixture gas becomes 37.5% of hydrogen (H₂), 19% of carbon monoxide (CO), 16.6% of carbon dioxide (CO₂), 25.3% of steam (H₂O), and 1.6% of methane (CH₄). Although the concentration of the carbon monoxide can be reduced by the above-described water gas shift reaction (shift reaction), 8.9% of the carbon monoxide remains.

PTL 3 discloses a carbon monoxide shift reactor (reactor for causing the shift reaction) as means for converting the carbon monoxide into the carbon dioxide and the hydrogen. However, the problem in which the carbon monoxide remains cannot be solved.

In the case of separating the hydrogen gas and the carbon dioxide, pressure swing adsorption (PSA) or membrane separation may be utilized. However, in the case of consecutively separating the hydrogen gas from a large amount of mixture gas, the pressure swing adsorption and the membrane separation are disadvantageous in terms of durability and maintenance cost. Here, cryogenic separation in which the necessary separating power is small may be utilized. Under normal pressure, the boiling point of H₂ is -254°C, the boiling point of CO is -190°C, and the sublimation point of CO₂ is -78.5°C. Therefore, it is easy to separate the hydrogen gas and the carbon dioxide, but it is not easy to separate the hydrogen gas and the carbon monoxide since the boiling points thereof are close to each other in consideration of partial pressure thereof.

In the case of consecutively separating the hydrogen from a large amount of mixture gas, an alkali absorption method in which the necessary separating power is small may be utilized. The alkali absorption method is a method of recovering the carbon dioxide by causing an alkaline absorbing liquid to absorb the carbon dioxide; see, for example, PTL 7 and in particular [0069]-[0070]. By heating the absorbing liquid, the absorbing liquid discharges the carbon dioxide. Thus, the absorbing liquid is recycled. After the absorbing liquid is cooled, it is repeatedly used for the absorption of the carbon dioxide.

On this account, in the case of separating the hydrogen gas by the cryogenic separation from the mixture gas after the water gas shift reaction, the carbon monoxide tends to be mixed in the hydrogen gas as the impurity, and it is difficult to obtain useful highly pure hydrogen gas.

### [Solution to Problem]

The present inventors have found that in the case of gasifying, for example, the low rank coal as the fuel to produce the hydrogen gas, the highly pure hydrogen gas can be easily produced by the cryogenic separation by: converting the carbon monoxide in the mixture gas into the hydrogen and the carbon dioxide by the water gas shift reaction as much as possible; next, oxidizing the carbon monoxide remaining after the water gas shift reaction to the carbon dioxide by the carbon monoxide selective oxidation catalyst; and separate the hydrogen gas and the carbon dioxide in a pressurized system.

Specifically, the present invention relates to a method of producing hydrogen, including the steps of: heating fuel in presence of steam; converting the steam and carbon monoxide of a produced gas obtained in the heating step into carbon dioxide and the hydrogen by causing the steam and the carbon monoxide to react with each other; cooling the produced gas after the converting step and causing the produced gas to contact a carbon monoxide selective oxidation catalyst to generate a reformed gas; and separating the hydrogen from the reformed gas by a gas separator, wherein: the carbon monoxide selective oxidation catalyst is being cooled by cooling water; and heat energy recovered by the cooling water having cooled the carbon monoxide selective oxidation catalyst is utilized to generate the steam supplied in the converting step.

It is preferable that the fuel be coal, low rank coal, or biomass. Herein, the biomass denotes trees, firewood, charcoal, and the like, which produce the hydrogen gas by the heating step as with the coal or the low rank coal.

It is preferable that the carbon monoxide selective oxidation catalyst be a ruthenium-based catalyst and be being cooled by the cooling water to not lower than 60°C and not higher than 210°C.

In one alternative the gas separator is an alkali absorption device configured to absorb the carbon dioxide by an alkali absorption method, in which:
by pressurizing an absorbing liquid and supplying the absorbing liquid from an absorption tower to a regeneration tower, an inside of the regeneration tower be maintained at about critical pressure of the carbon dioxide or at not lower than the critical pressure of the carbon dioxide, and
when the absorbing liquid is supplied from the regeneration tower to the absorption tower, the absorbing liquid be depressurized by a pressure regulator.

In another alternative the gas separator be a cryogenic separation device, in which:
by compressing liquefied carbon dioxide generated in a distillation tower, pressure of the liquefied carbon dioxide be maintained at about critical pressure of the carbon dioxide or at not lower than the critical pressure of the carbon dioxide, and
before the reformed gas is expanded, the reformed gas be precooled by using the liquefied carbon dioxide generated in the distillation tower and the hydrogen extracted from the distillation tower.

According to the hydrogen gas production method of the present invention, when gasifying the coal, the low rank coal, or the biomass as the fuel to produce the hydrogen gas, the carbon monoxide remaining in the produced gas is oxidized to the carbon dioxide by the carbon monoxide selective oxidation catalyst after the water gas shift reaction (shift reaction). Thus, the hydrogen and the carbon monoxide can be easily separated from each other by using the gas separator. As a result, even in the case of using, for example, the low rank coal as the fuel, the highly pure hydrogen can be produced.

The hydrogen production method of the present invention is also characterized in that: the carbon monoxide selective oxidation catalyst is being cooled by the cooling water; and the heat energy recovered by the cooling water having cooled the carbon monoxide selective oxidation catalyst is utilized to generate the steam supplied in the converting step.

The reaction of oxidizing the carbon monoxide to the carbon dioxide is an exothermic reaction, and the produced gas after the heating step and the converting step needs to be cooled such that the carbon monoxide selective oxidation catalyst is within a temperature range suitable for a catalytic function. In prior arts, the steam is supplied from an exhaust heat recovery boiler to a shift reactor in which the converting step is executed. However, according to the present invention, the carbon monoxide selective oxidation catalyst is indirectly cooled by the cooling water, and the recovered heat energy is utilized as a preheat source of make-up water of the exhaust heat recovery boiler. With this, the temperature adjustment of the carbon monoxide selective oxidation catalyst and the increase in the amount of steam by the heat recovery can be achieved at the same time.

It is preferable that the carbon dioxide separated from the hydrogen in the separating step be stored by using a carbon dioxide storage device.

By storing in the carbon dioxide storage device the carbon dioxide separated from the hydrogen, the carbon dioxide can be prevented from being discharged to the atmosphere. According to the hydrogen gas production method of the present invention, the highly pure hydrogen gas can be easily produced at the place where, for example, the low rank coal is produced. Therefore, the separated carbon dioxide can be stored in, for example, mined layers of the low rank coal.

### [Advantageous Effects of Invention]

According to the hydrogen production method of the present invention, the useful highly pure hydrogen can be easily produced even in the case of using the fuel, such as the low rank coal or the biomass, which is low in quality as the fuel for use in producing the hydrogen. In addition, according to the hydrogen production system of the present invention, while producing the highly pure hydrogen at the place where, for example, the low rank coal is produced, the carbon dioxide is fixed to the place where, for example, the low rank coal is produced. With this, the carbon-free highly pure hydrogen gas can be used at the place where the hydrogen is consumed.

### [Brief Description of Drawings]

[Fig. 1] Fig. 1 shows a diagram for explaining a conventional hydrogen gas production method.
[Fig. 2] Fig. 2 shows a diagram for explaining Embodiment 1 of the present invention.
[Fig. 3] Fig. 3 shows a diagram showing one example of an entrained bed gasification furnace preferably used in a hydrogen production method of the present invention.
[Fig. 4] Fig. 4 shows a conceptual diagram showing a method of preparing fuel slurry from raw coal.
[Fig. 5] Fig. 5 shows a diagram for explaining Embodiment 2 of the present invention.
[Fig. 6] Fig. 6 shows a diagram for explaining Embodiment 3 of the present invention.
[Fig. 7] Fig. 7 shows a diagram for explaining an alkali absorption device used in the present invention.
[Fig. 8] Fig. 8 shows a diagram for explaining a cryogenic separation device used in the present invention.
[Fig. 9] Fig. 9 shows a diagram for explaining a cryogenic separation device preferably used in the present invention as an oxygen production device.

### [Description of Embodiments]

Hereinafter, embodiments of the present invention will be explained suitably in reference to the drawings. However, the present invention is not limited to the following description.

### Prior Art

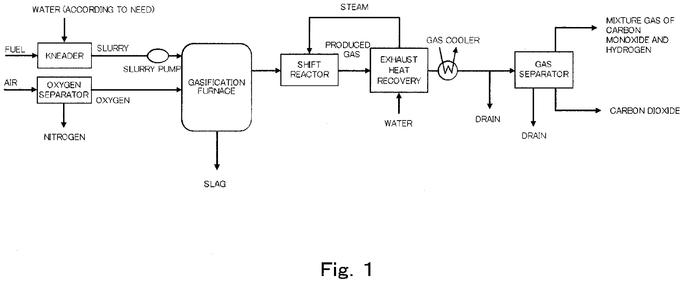

A prior art of producing hydrogen by a gasification furnace using coal, low rank coal, biomass or the like as fuel will be explained based on Fig. 1. First, slurry is prepared from the fuel, such as the coal, by using a kneader. At this time, water is suitably added in accordance with the water content of the original fuel. The fuel slurry is supplied to the gasification furnace by a pump. At the same time as the supply of the fuel slurry, oxygen is supplied to the gasification furnace from an oxygen separator.

The gasification furnace is connected to a shift reactor. In the gasification furnace, hydrogen, carbon monoxide, carbon dioxide, and methane are generated by the gasification of the fuel. The residue of the fuel after the reaction is disposed as slag, and the produced gas is cooled to about 100 to 200°C by a gas cooler. The shift reactor is connected to an exhaust heat recovery boiler. Steam (superheated steam, about 260 to 600°C) generated by an exhaust heat recovery boiler is supplied to the shift reactor. In the shift reactor, a part of the carbon monoxide and the steam react with each other to be converted into the hydrogen and the carbon dioxide by a water gas shift reaction (shift reaction).

After drain water generated by cooling the produced gas is removed, the produced gas is supplied to a gas separator and is separated into the hydrogen and other gases. At this time, as described above, it is difficult to separate the hydrogen and the carbon monoxide. In the case of producing the hydrogen from the low rank coal or the biomass, the ratio of the carbon monoxide in the produced gas is high, so that it is difficult to produce highly pure hydrogen.

The carbon dioxide, which is easily separated from the hydrogen, is separately recovered from the gas separator. The carbon dioxide is converted into a state, such as liquefied carbon dioxide, which is easy to store, and is then stored. The carbon dioxide is finally disposed by being fixed to aquifer, coal seams, or mining layers of a place where the low rank coal is produced, deep sea, or the like.

### Embodiment 1

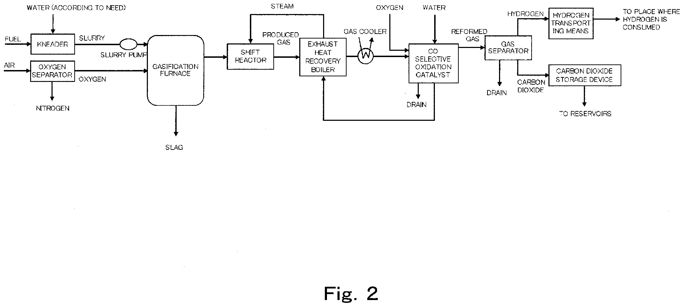

One example of embodiments of the present invention will be explained based on Fig. 2. Steps until the step of preparing the fuel slurry from the low rank coal or the like and cooling the produced gas generated by the gasification furnace are the same as those in the prior art shown in Fig. 1. According to the hydrogen production method of the present invention, after the produced gas is cooled, fine particles and the like in the produced gas are removed by using a dust remover, such as a ceramic filter or a cyclone dust collector, and a carbon monoxide selective oxidation catalyst and the produced gas are then caused to contact each other to oxidize the carbon monoxide in the produced gas to the carbon dioxide. Thus, the ratio of the carbon monoxide in the produced gas can be reduced to an extremely low level.

A ruthenium-based catalyst (Ru/Al₂O₃; ruthenium using alumina as carrier) is preferable as the carbon monoxide selective oxidation catalyst since reaction heat can be used for preheating of make-up water of the exhaust heat recovery boiler. In the case of using the ruthenium-based catalyst, the temperature of the catalyst needs to be adjusted to not lower than 60°C and not higher than 210°C. For example, the saturation temperature is 212°C under gasification pressure of 20 MPa. Thus, the reaction heat can be effectively utilized for the preheating of the make-up water of the exhaust heat recovery boiler.

The cooling water having cooled the carbon monoxide selective oxidation catalyst is supplied to the exhaust heat recovery boiler configured to supply the steam to the shift reactor, and is utilized as preheated boiler supply water. As a result, the reaction heat of the carbon monoxide is supplied to the shift reactor as the heat of the steam. Therefore, as compared to the prior arts, a larger amount of steam can be supplied to the shift reactor without decreasing the reaction temperature of the shift reactor. As a result, the effect of obtaining a larger amount of hydrogen can be achieved.

The produced gas having flowed through a catalytic device filled with the carbon monoxide selective oxidation catalyst contains little carbon monoxide. Therefore, it is easy to separate the hydrogen and other gases (carbon dioxide, steam, methane, and the like) by the gas separator. As a result, even in the case of using, for example, the low rank coal as the fuel, highly pure hydrogen can be produced easily.

The highly pure hydrogen gas obtained by the gas separator is transported by hydrogen transporting means (hydrogen gas transporting means), such as pipe lines, from the place where, for example, the low rank coal is produced to a faraway place where the hydrogen is consumed (place where the hydrogen gas is consumed). The gas discharged from the gas separator and containing the carbon dioxide as a major component is suitably stored as the liquefied carbon dioxide in a carbon dioxide storage device. After a certain amount of liquefied carbon dioxide is stored, the liquefied carbon dioxide is stored in (fixed to) reservoirs, such as aquifer, coal seams, mined layers, or the like of the place where, for example, the low rank coal is produced. As above, according to the present invention, the carbon dioxide can be separated, recovered, and fixed at the place where, for example, the low rank coal is produced. Therefore, it is unnecessary to separate, recover, and fix the carbon dioxide at the place where the hydrogen is consumed. Thus, the carbon-free highly pure hydrogen gas can be used at the place where the hydrogen is consumed.

Here, known as major gasification furnaces are three types that are a fixed bed type, a fluid bed type, and an entrained bed type. Table 1 shows fuel particle diameters, retention times, gasification temperatures, and relations with an ash melting point of respective gasification furnaces.

**[Table 1]**

| | Fixed bed | Fluid bed | Entrained bed |
|---|---|---|---|
| Fuel particle diameter | 5-50 mm | 0.5-50 mm | 0.5 mm or shorter |
| Retention time | 15-30 min. | 5-50 sec. | 1-10 sec. |
| Gasification temperature | 400-500°C | 700-900°C | 900-1600°C |
| Relation with ash melting point | Lower than Ash melting point | Lower than Ash melting point | Higher than Ash melting point |

In the entrained bed type, since the gasification is performed at a high temperature equal to or higher than the ash melting point, it is also possible to decompose tar, which cannot be decomposed in the fixed bed type and the fluid bed type. In addition, since it is easy to remove the generated slag, the entrained bed type is suitable for the continuous operation.

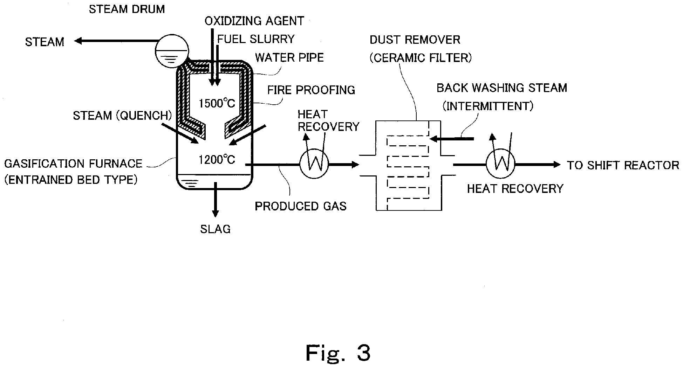

Fig. 3 shows one example of the entrained bed gasification furnace preferably used in the hydrogen production method of the present invention. The fuel slurry and an oxidizing agent (such as oxygen gas) are supplied to the entrained bed gasification furnace of Fig. 3 through a supply port provided on an upper surface of the furnace. An inner side of an upper portion of the entrained bed gasification furnace is covered with a fire proofing wall (such as a fire brick) in which water pipes (heat transfer pipes) are embedded. In the entrained bed gasification furnace, the fuel slurry is heated to about 1,500°C and gasified.

The water pipes are connected to a steam drum attached to the entrained bed gasification furnace. The water circulates in the water pipes and the steam drum. As a result, a part of heat energy in the furnace is recovered by the water circulating in the water pipes, and high-temperature water and high-temperature steam can be stored in the steam drum. The high-temperature steam in the steam drum can be utilized as the heat source when preparing the fuel slurry by kneading, for example, the low rank coal.

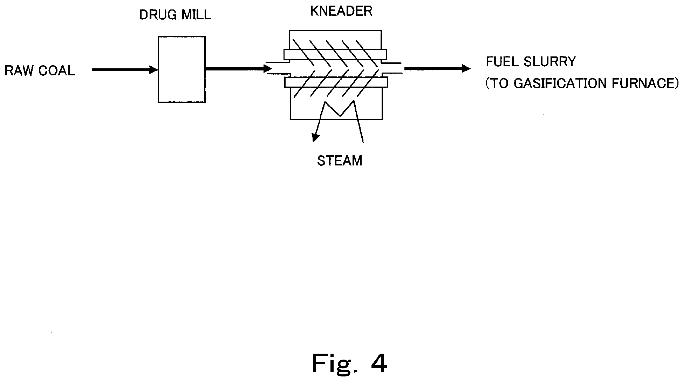

To be specific, as shown in Fig. 4, the fuel slurry is obtained by crushing raw coal using a drug mill and kneading the crushed raw coal using a kneader while heating the crushed raw coal. As this heat source, the steam supplied from the steam drum of Fig. 3 can be used. The steam from the exhaust heat recovery boiler may be used as the heat source.

In the entrained bed gasification furnace of Fig. 3, a steam supply port is provided in the vicinity immediately under the upper portion whose inner side is covered with the fire proofing wall. The steam is supplied through the steam supply port to the furnace as quench. By this steam supply, the water gas shift reaction (shift reaction) occurs at a lower portion of the gasification furnace. Simultaneously, the temperature of the gas in the furnace decreases to about 1,200°C, and the slag generated from the fuel slurry is accumulated on a bottom portion of the gasification furnace. As the steam supplied as the quench, the steam from the steam drum may be supplied.

The produced gas extracted from the lower portion of the entrained bed gasification furnace is cooled, and the fine particles and the like are then removed from the produced gas by the dust remover (the ceramic filter is shown in Fig. 3). The ceramic filter needs to be subjected to back washing periodically by causing the gas to flow backward from a downstream side. As a back washing gas, the steam may be supplied from the steam drum.

The produced gas from which the dusts have been removed by the dust remover is further cooled and then supplied to a shift reaction passage.

### Embodiment 2

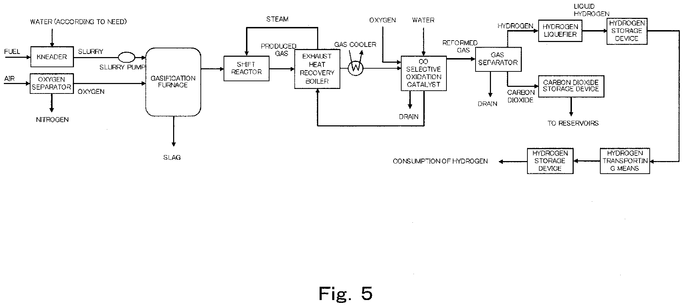

Another example of the embodiments of the present invention will be explained based on Fig. 5. Embodiment 2 is the same as Embodiment 1 shown in Fig. 2 until the highly pure hydrogen is obtained by the gas separator. In addition, the method of processing the carbon dioxide discharged from the gas separator is also the same as that in Embodiment 1. Therefore, only the differences from Embodiment 1 will be explained.

In Embodiment 2, the highly pure hydrogen obtained by the gas separator is liquefied into liquid hydrogen by a hydrogen liquefier (hydrogen liquefying means), and the liquid hydrogen is then stored in a hydrogen storage device (produced place storage means). The liquid hydrogen stored in the hydrogen storage device is transported by transportation means, such as tankers and trains, to a hydrogen storage device (consumed place storage means) in the place where the liquid hydrogen is consumed. In Embodiment 2, the carbon dioxide can be separated, recovered, and fixed at the place where, for example, the low rank coal is produced. Therefore, it is unnecessary to separate, recover, and fix the carbon dioxide at the place where the hydrogen is consumed. Thus, the carbon-free highly pure hydrogen gas can be used at the place where the hydrogen is consumed (mainly at large power plants and iron mills).

### Embodiment 3

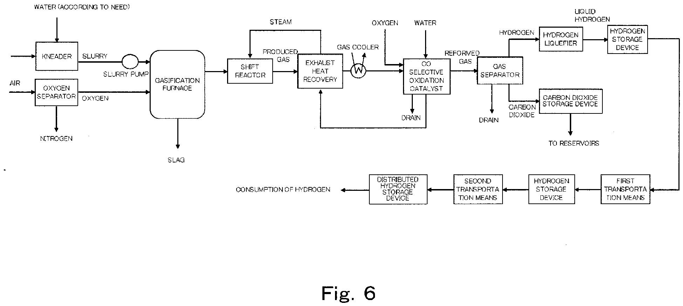

Yet another example of the embodiments of the present invention will be explained based on Fig. 6. Embodiment 3 is the same as Embodiment 2 shown in Fig. 5 until the liquid hydrogen is stored in the hydrogen storage device (produced place storage means) and the liquid hydrogen is transported by the transportation means (first transportation means), such as tankers and trains, to the hydrogen storage device (consumed place storage means) located in the place where the liquid hydrogen is consumed. In addition, the method of processing the carbon dioxide discharged from the gas separator is also the same as that in Embodiment 2. Therefore, only the differences from Embodiment 2 will be explained.

In Embodiment 3, the liquid hydrogen is transported by the first transportation means, such as tankers and trains, to the hydrogen storage device (consumed place storage means) located in the place where the liquid hydrogen is consumed. Further, the liquid hydrogen is transported by second transportation means, such as tank trucks, to distributed hydrogen storage devices (distributed hydrogen storage means), such as hydrogen stations and hydrogen gas stands, and is stored in the distributed hydrogen storage devices.

The distributed hydrogen storage device suitably supplies the liquid hydrogen to factories, hydrogen gas vehicles, and the like. Even when the supplied hydrogen gas is combusted, the carbon dioxide is not generated. Therefore, at the place where the liquid hydrogen is consumed, it is unnecessary to separate and recover the carbon dioxide when consuming the hydrogen gas. Thus, the hydrogen gas can be utilized as the carbon-free hydrogen gas.

### Example

Calculated was the composition of the hydrogen produced by a computer simulation in which the hydrogen was produced by the steps shown in Fig. 2 using the low rank coal as the fuel. The properties of the low rank coal used are shown in Table 2, and brown coal was used. However, peat or biomass, which is similar in composition to the brown coal, may be used. As the conditions of the gasification furnace, the gasification pressure was 2.0 MPa, O₂/C was 0.56, and 99.5% pure oxygen was used as the oxidizing agent.

The produced gas was cooled to 100 to 200°C by the exhaust heat recovery boiler and the gas cooler. Then, while cooling the ruthenium-based catalyst (Ru/Al₂O₃) to 60 to 210°C, the ruthenium-based catalyst was caused to contact the produced gas. Thus, the catalyst was reformed. Used as the gas separator was a cryogenic separation device using a plate distillation tower. Numerical values in Table 2 are values based on dry weight except for the moisture.

**[Table 2]**

| Properties of Low Rank Coal | | |
|---|---|---|
| Heating Value | Low Heating Value [kJ/kgDry] | 25,377 |
| | High Heating Value [kJ/kgDry] | 26,400 |
| Technical Analysis (wt%) | Moisture | 50.0% |
| | Ash | 2.2% |
| | Volatile Matter | 48.5% |
| | Fixed Carbon | 49.3% |
| Elemental Analysis (wt%) | Carbon | 67.6% |
| | Hydrogen | 4.6% |
| | Oxygen | 24.7% |
| | Nitrogen | 0.6% |
| | Sulfur | 0.4% |
| Mole Ratio | C : H : O = 10 : 8 : 3 | |

### Comparative Example

Calculated was the composition of the hydrogen produced by a computer simulation in which the hydrogen was produced by the steps shown in Fig. 1 using the low rank coal as the fuel. The properties of the low rank coal used are shown in Table 2, similarly.

Table 3 shows the fuel, oxidizing agent, and steam content supplied to the gasification furnace, and the amount of hydrogen in the obtained product gas (hydrogen gas) in each of Example and Comparative Example.

**Table 3**

| Flow Rate (Mole Ratio) | | Example | Comparative Example |
|---|---|---|---|
| Fuel | Total | 3.078 | 3.078 |
| | (C) | 1.000 | 1.000 |
| | (H, O) | 1.100 | 1.100 |
| | (H₂O) | 0.978 | 0.978 |
| Oxidizing Agent | O₂ | 0.563 | 0.562 |
| Steam | Reformed Steam | 3.113 | 1.963 |
| Product | H₂ | 0.775 | 0.745 |

It was confirmed by Table 3 that even in the case of using the same low rank coal as the fuel, the steam content in Example was larger than that in Comparative Example, and the amount of hydrogen produced in Example was also larger than that in Comparative Example.

Table 4 shows the results of the simulation of the composition of the gas at a stage before the supply to the cryogenic separation device. Table 5 shows the composition of the product gas (hydrogen gas) obtained from the cryogenic separation device by separation.

**Table 4**

| Gas at Stage Before Supply to Cryogenic Separation Device | | |
|---|---|---|
| Gas Composition (mol%) | Example | Comparative Example |
| CH₄ | 0.0% | 0.2% |
| N₂ | 0.1% | 0.1% |
| O₂ | 0.0% | 0.0% |
| CO | 0.03% | 8.9% |
| CO₂ | 41.7% | 33.3% |
| H₂O | 25.7% | 25.7% |
| H₂ | 32.4% | 31.7% |

**Table 5**

| Composition of Product Gas | | |
|---|---|---|
| Gas Composition (Mole%) | Example | Comparative Example |
| CH₄ | 0.0% | 0.5% |
| N₂ | 0.4% | 0.3% |
| O₂ | 0.0% | 0.0% |
| CO | 0.1% | 21.4% |
| CO₂ | 2.3% | 1.7% |
| H₂O | 0.0% | 0.0% |
| H₂ | 97.2% | 76.1% |

The compositions of the gases at the stage before the supply to the cryogenic separation device (at a stage after the carbon monoxide selective oxidation by the ruthenium-based catalyst) are compared with each other based on Table 4. The H₂O concentration is substantially the same between Example and Comparative Example, and the H₂O is easily separated by condensation. Therefore, the other concentrations are compared with each other. In Example, the CO concentration is 0.03%, that is, low, and only CO₂ may be separated to obtain the highly pure hydrogen gas. In contrast, in Comparative Example, the CO concentration is 8.9%, and CO₂ and CO need to be separated.

The compositions of the product gases (hydrogen gases) obtained by the cryogenic separation device by the separation are compared with each other based on Table 5. In Comparative Example, the product gas contains 21.4% of CO, which is not preferable as the carbon-free highly pure hydrogen. In Comparative Example, the purity of the hydrogen gas can be improved by adding the cryogenic separation device. However, the cryogenic separation device becomes too large, additional separating force is required, and the heating value of the separated CO cannot be effectively utilized. In contrast, in Example, the H₂ concentration was 97.2%, and it was confirmed that the purer hydrogen gas than Comparative Example can be obtained.

### Example 1 of Gas Separator

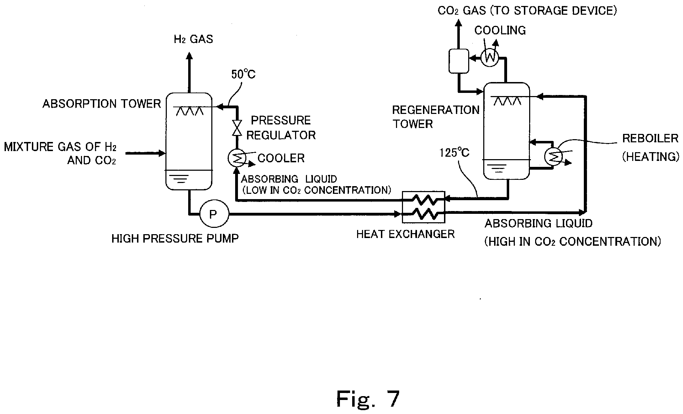

In a case where the gas separator used in the present invention is an alkali absorption device, it is preferable that the gas separator have the configuration shown in Fig. 7. The alkali absorption device shown in Fig. 7 is characterized in that: after an absorbing liquid is caused to absorb the carbon dioxide, a high pressure pump applies pressure to the absorbing liquid having absorbed the carbon dioxide to supply the absorbing liquid to a regeneration tower; and when returning the regenerated absorbing liquid to an absorption tower, the absorbing liquid is reduced in pressure by a pressure regulator, such as an expansion valve or a valve.

In conventional alkali absorption devices, the absorption tower for causing the low-temperature absorbing liquid to absorb the carbon dioxide and the regeneration tower for heating the absorbing liquid having absorbed the carbon dioxide to discharge the carbon dioxide are connected to each other by an absorbing liquid circulation passage and are the same in pressure as each other. However, in the alkali absorption device shown in Fig. 7, the absorbing liquid in the absorption tower is pressurized by the high pressure pump to be supplied to the regeneration tower, and a pressure regulating valve is disposed on a passage through which the absorbing liquid returns from the regeneration tower to the absorption tower. Thus, the pressure in the regeneration tower can be maintained higher than the pressure in the absorption tower.

Here, the hydrogen obtained by the gasification of, for example, the coal can be used at normal pressure, and even in the case of using the hydrogen in a gas turbine having a high pressure ratio, the pressure of about 3.5 MPa is enough. To stably store the carbon dioxide for a long period of time, the carbon dioxide needs to be in a supercritical state, that is, the carbon dioxide needs to have the pressure of 7.4 MPa or higher and the temperature of 31°C or higher at normal temperature. According to conventional methods, the pressure of each of the hydrogen and carbon dioxide generated from, for example, the coal is 3.5 MPa or lower. On this account, at the time of the CCS, a large amount of energy is required to pressurize the carbon dioxide to 7.4 MPa or higher.

However, in the alkali absorption device shown in Fig. 7, the pressure in the regeneration tower can be maintained at 7.4 MPa or higher by pressurizing by the high pressure pump the absorbing liquid having absorbed the carbon dioxide. Therefore, smaller energy than a case where the carbon dioxide gas is pressurized to 7.4 MPa or higher is enough. For example, when η is 80%, compression force of pressurizing one ton of carbon dioxide gas from 2.0 MPa to 7.4 MPa is 26.7 kWh, and the compression force of pressurizing 10 tons of absorbing liquid to the same pressure is 19.9kWh, so that 0.74 time is enough.

When the pressure in the absorption tower is 2.0 MPa and the pressure in the regeneration tower is 7.4 MPa, the temperature in the absorption tower is about 50°C, and the temperature in the regeneration tower is about 125°C. It is preferable that a heat exchanger perform heat exchange between the absorbing liquid pressurized by the high pressure pump to 7.4 MPa or higher and the absorbing liquid to be returned from the regeneration tower to the absorption tower. The absorbing liquid precooled by the heat exchanger and further cooled to about 50°C by a cooler is reduced in pressure from 7.4 MPa to 2.0 MPa by the pressure regulating valve.

### Example 2 of Gas Separator

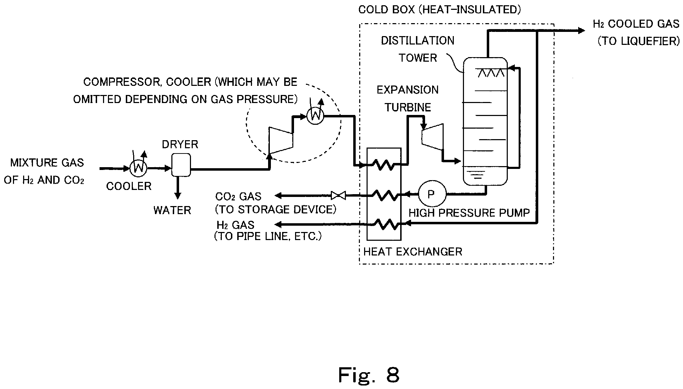

In a case where the gas separator used in the present invention is a cryogenic separation device, it is preferable that the gas separator have the configuration shown in Fig. 8. The cryogenic separation device shown in Fig. 8 is characterized in that the liquefied carbon dioxide liquefied in the distillation tower is pressurized to 7.4 MPa or higher by the high pressure pump.

After the moisture is removed from the mixture gas (reformed gas) containing the hydrogen and the carbon dioxide, the mixture gas is compressed and cooled according to need and supplied to the distillation tower by the expansion turbine, and the carbon dioxide having a high boiling point is stored in a bottom portion of the distillation tower as the liquefied carbon dioxide. When extracting the liquefied carbon dioxide from the distillation tower, the liquefied carbon dioxide is pressurized to 7.4 MPa or higher by the high pressure pump. With this, the carbon dioxide in the supercritical state can be transported to the carbon dioxide storage device.

In the case of compressing one ton of liquefied carbon dioxide from 2.0 MPa to 7.4 MPa, necessary force is 1.95 kWh. Therefore, as compared to a case where the carbon dioxide gas is compressed under the same conditions, 0.07 time is enough.

The liquefied carbon dioxide pressurized by the high pressure pump is supplied to the heat exchanger to precool the compressed mixture gas and is then transported to the carbon dioxide storage device as high-pressure normal-temperature carbon dioxide (supercritical state).

The hydrogen separated from the carbon dioxide is extracted as a hydrogen cooled gas from an upper portion of the distillation tower. In the case of converting the hydrogen into liquid hydrogen, the hydrogen is supplied to the liquefier. In a case where the hydrogen is transported as the hydrogen gas through the pipe lines, the hydrogen cooled gas may be supplied to the heat exchanger and utilized for precooling the compressed mixture gas.

### Oxygen Gas Generator

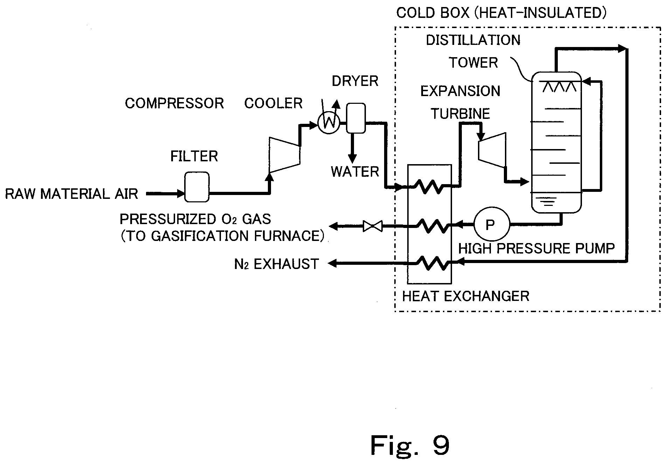

It is also preferable to produce oxygen (oxygen gas) by utilizing the cryogenic separation device shown in Fig. 9, the oxygen being supplied to the gasification furnace as the oxidizing agent. The cryogenic separation device shown in Fig. 9 is the same in basic configuration as the cryogenic separation device shown in Fig. 8. Air that is a raw material is compressed by a compressor, and then cooled and dehumidified. Then, the air is supplied to the distillation tower by the expansion turbine, and oxygen having a high boiling point is stored in the bottom portion of the distillation tower as liquid oxygen. When extracting the liquid oxygen from the distillation tower, the liquid oxygen is pressurized to the internal pressure of the gasification furnace or higher by the high pressure pump. Thus, the oxygen gas can be supplied to the gasification furnace as the oxidizing agent. At this time, the pressurized liquid oxygen is supplied to the heat exchanger for precooling the compressed air and then supplied to the gasification furnace as the high-pressure normal-temperature oxygen gas.

A nitrogen gas separated from the liquid oxygen is extracted as a nitrogen cooled gas from the upper portion of the distillation tower. Then, the nitrogen gas is supplied to the heat exchanger for precooling the compressed air, and the nitrogen gas is then discharged to the atmosphere.

### [Industrial Applicability]

The hydrogen production method of the present invention is useful in the energy field and a wide range of industrial fields in which the hydrogen is utilized.

## Claims

1. A method of producing hydrogen, comprising the steps of:
heating fuel in presence of steam;
converting the steam and carbon monoxide of a produced gas obtained in the heating step into carbon dioxide and the hydrogen by causing the steam and the carbon monoxide to react with each other;
cooling the produced gas after the converting step and causing the produced gas to contact a carbon monoxide selective oxidation catalyst to generate a reformed gas; and
separating the hydrogen from the reformed gas by a gas separator, wherein:
the carbon monoxide selective oxidation catalyst is being cooled by cooling water;
heat energy recovered by the cooling water having cooled the carbon monoxide selective oxidation catalyst is utilized to generate the steam supplied in the converting step; and
the gas separator is an alkali absorption device configured to absorb the carbon dioxide by an alkali absorption method, in which:
by pressurizing an absorbing liquid and supplying the absorbing liquid from an absorption tower to a regeneration tower, an inside of the regeneration tower is maintained at about critical pressure of the carbon dioxide or at not lower than the critical pressure of the carbon dioxide, and
when the absorbing liquid is supplied from the regeneration tower to the absorption tower, the absorbing liquid is depressurized by a pressure regulator.

2. A method of producing hydrogen, comprising the steps of:
heating fuel in presence of steam;
converting the steam and carbon monoxide of a produced gas obtained in the heating step into carbon dioxide and the hydrogen by causing the steam and the carbon monoxide to react with each other;
cooling the produced gas after the converting step and causing the produced gas to contact a carbon monoxide selective oxidation catalyst to generate a reformed gas; and
separating the hydrogen from the reformed gas by a gas separator, wherein:
the carbon monoxide selective oxidation catalyst is being cooled by cooling water;
heat energy recovered by the cooling water having cooled the carbon monoxide selective oxidation catalyst is utilized to generate the steam supplied in the converting step; and
the gas separator is a cryogenic separation device, in which:
by compressing liquefied carbon dioxide generated in a distillation tower, pressure of the liquefied carbon dioxide is maintained at about critical pressure of the carbon dioxide or at not lower than the critical pressure of the carbon dioxide, and
before the reformed gas is expanded, the reformed gas is precooled by using the liquefied carbon dioxide generated in the distillation tower and the hydrogen extracted from the distillation tower

3. The method according to claim 1 or claim 2, wherein the fuel is coal, low rank coal, or biomass.

4. The method according to claim 1 or claim 2, wherein the carbon monoxide selective oxidation catalyst is a ruthenium-based catalyst and is being cooled by the cooling water to not lower than 60°C and not higher than 210°C.

## Patentansprüche

1. Verfahren zur Erzeugung von Wasserstoff, umfassend die Schritte von:
Erwärmen von Treibstoff im Beisein von Dampf;
Umwandeln des Dampfs und Kohlenmonoxids eines produzierten Gases, das im Erwärmungsschritt erhalten wird, in Kohlendioxid und den Wasserstoff, indem der Dampf und das Kohlenmonoxid miteinander zur Reaktion gebracht werden;
Kühlen des produzierten Gases nach dem Umwandlungsschritt und Veranlassen des produzierten Gases, mit einem kohlenmonoxidselektiven Oxidationskatalysator in Kontakt zu gelangen, um ein reformiertes Gas zu erzeugen; und
Trennen des Wasserstoffs vom reformierten Gas durch einen Gasabscheider, wobei:
der kohlenmonoxidselektive Oxidationskatalysator durch Kühlwasser gekühlt ist;
Wärmeenergie, die durch Kühlwasser wiedergewonnen wird, das den kohlenmonoxidselektiven Oxidationskatalysator gekühlt hat, verwendet wird, um den Dampf zu erzeugen, der im Umwandlungsschritt zugeführt wird; und
der Gasabscheider eine Alkali-Absorptionsvorrichtung ist, die konfiguriert ist, das Kohlendioxid durch ein Alkali-Absorptionsverfahren zu absorbieren, in der:
durch Unterdrucksetzen einer absorbierenden Flüssigkeit und Zuführen der absorbierenden Flüssigkeit aus einem Absorptionsturm zu einem Regenerationsturm eine Innenseite des Regenerationsturms bei ungefähr kritischem Druck des Kohlendioxids oder bei nicht niedrigerem als dem kritischen Druck des Kohlendioxids gehalten wird, und
wenn die absorbierende Flüssigkeit vom Regenerationsturm zum Absorptionsturm zugeführt wird, der Druck auf der absorbierenden Flüssigkeit durch einen Druckregulator entlastet wird.

2. Verfahren zum Erzeugen von Wasserstoff, umfassend die Schritte von:
Erwärmen von Treibstoff im Beisein von Dampf;
Umwandeln des Dampfs und Kohlenmonoxids eines produzierten Gases, das im Erwärmungsschritt erhalten wird, in Kohlendioxid und den Wasserstoff, indem der Dampf und das Kohlenmonoxid miteinander zur Reaktion gebracht werden;
Kühlen des produzierten Gases nach dem Umwandlungsschritt und Veranlassen des produzierten Gases, mit einem kohlenmonoxidselektiven Oxidationskatalysator in Kontakt zu gelangen, um ein reformiertes Gas zu erzeugen; und
Trennen des Wasserstoffs vom reformierten Gas durch einen Gasabscheider, wobei:
der kohlenmonoxidselektive Oxidationskatalysator durch Kühlwasser gekühlt ist;
Wärmeenergie, die durch Kühlwasser wiedergewonnen wird, das den kohlenmonoxidselektiven Oxidationskatalysator gekühlt hat, verwendet wird, um den Dampf zu erzeugen, der im Umwandlungsschritt zugeführt wird; und
der Gasabscheider eine Kühlmittel-Trennungsvorrichtung ist, in der:
durch Komprimieren von verflüssigtem Kohlendioxid, das in einem Destillationsturm erzeugt wird, Druck vom verflüssigten Kohlendioxid bei ungefähr dem kritischen Druck des Kohlendioxids oder bei nicht weniger als dem kritischen Druck des Kohlendioxids gehalten wird, und
bevor das reformierte Gas sich ausdehnt, das reformierte Gas unter Verwendung des verflüssigten Kohlendioxids, das im Destillationsturm erzeugt wird, und des Wasserstoffs, der aus dem Destillationsturm extrahiert wird, vorgekühlt wird.

3. Verfahren nach Anspruch 1 oder Anspruch 2, wobei der Treibstoff Kohle, niederwertige Kohle oder Biomasse ist.

4. Verfahren nach Anspruch 1 oder Anspruch 2, wobei der kohlenmonoxidselektive Oxidationskatalysator ein auf Ruthenium basierter Katalysator ist und durch das Kühlwasser auf nicht weniger als 60 °C und nicht mehr als 210 °C gekühlt wird.

## Revendications

1. Procédé de production d'hydrogène, comprenant les étapes consistant à :
chauffer du combustible en présence de vapeur d'eau ;
convertir la vapeur d'eau et le monoxyde de carbone d'un gaz produit obtenu à l'étape de chauffage en dioxyde de carbone et en hydrogène en amenant la vapeur d'eau et le monoxyde de carbone à réagir mutuellement ;
refroidir le gaz produit après l'étape de conversion et amener le gaz produit à venir en contact avec un catalyseur d'oxydation sélective de monoxyde de carbone pour générer un gaz reformé ; et
séparer l'hydrogène du gaz reformé par un séparateur de gaz, dans lequel :
le catalyseur d'oxydation sélective de monoxyde de carbone est refroidi par de l'eau de refroidissement ;
l'énergie thermique récupérée par l'eau de refroidissement ayant refroidi le catalyseur d'oxydation sélective de monoxyde de carbone est utilisée pour générer la vapeur d'eau fournie à l'étape de conversion ; et
le séparateur de gaz est un dispositif d'absorption d'alcali configuré pour absorber le dioxyde de carbone par un procédé d'absorption d'alcali, dans lequel :
en plaçant sous pression un liquide absorbant et en fournissant le liquide absorbant d'une tour d'absorption à une tour de régénération, l'intérieur de la tour de régénération est maintenu à une pression à peu près critique du dioxyde de carbone ou à une pression qui n'est pas inférieure à la pression critique du dioxyde de carbone, et
lorsque le liquide absorbant est fourni de la tour de régénération à la tour d'absorption, le liquide d'absorption est dépressurisé par un régulateur de pression.

2. Procédé de production d'hydrogène, comprenant les étapes consistant à :
chauffer du combustible en présence de vapeur d'eau ;
convertir la vapeur d'eau et le monoxyde de carbone d'un gaz produit obtenu à l'étape de chauffage en dioxyde de carbone et en hydrogène en amenant la vapeur d'eau et le monoxyde de carbone à réagir mutuellement ;
refroidir le gaz produit après l'étape de conversion et amener le gaz produit à venir en contact avec un catalyseur d'oxydation sélective de monoxyde de carbone pour générer un gaz reformé ; et
séparer l'hydrogène du gaz reformé par un séparateur de gaz, dans lequel :
le catalyseur d'oxydation sélective de monoxyde de carbone est refroidi par de l'eau de refroidissement ;
l'énergie thermique récupérée par l'eau de refroidissement ayant refroidi le catalyseur d'oxydation sélective de monoxyde de carbone est utilisée pour générer la vapeur d'eau fournie à l'étape de conversion ; et
le séparateur de gaz est un dispositif de séparation cryogénique, dans lequel,
en comprimant le dioxyde de carbone liquéfié généré dans une tour de distillation, la pression du dioxyde de carbone liquéfié est maintenue à une pression à peu près critique du dioxyde de carbone ou à une pression qui n'est pas inférieure à la pression critique du dioxyde de carbone, et
avant que le gaz reformé ne soit dilaté, le gaz reformé est pré-refroidi en utilisant le dioxyde de carbone liquéfié généré dans la tour de distillation et l'hydrogène extrait de la tour de distillation.

3. Procédé selon la revendication 1 ou la revendication 2, dans lequel le combustible est du charbon, du charbon de rang bas ou de la biomasse.

4. Procédé selon la revendication 1 ou la revendication 2, dans lequel le catalyseur d'oxydation sélective de monoxyde de carbone est un catalyseur à base de ruthénium et est refroidi par l'eau de refroidissement à une température qui n'est pas inférieure à 60 °C et n'est pas supérieure à 210 °C.
